# EUROPEAN PATENT APPLICATION

(11) **EP 3 292 961 A1**
(43) Date of publication of application: **14.03.2018**
(21) Application number: 16789487.2
(22) Date of filing: 06.04.2016
(51) Int. Cl.: B25J 9/06, G01N 1/00

(54) **SAMPLE TREATMENT SYSTEM**

(30) Priority: 07.05.2015 JP 2015095034
(71) Applicant: Yamato Scientific Co. Ltd., Tokyo 103-0023 (JP); Kawada Robotics Corporation, Tokyo 103-0023 (JP); The University of Tokyo, Tokyo 113-8654 (JP)
(72) Inventor: MOTOJIMA, Kazuyuki, Tokyo 103-0023 (JP); KATOU, Daisuke, Tokyo 103-0023 (JP); ONO, Takatsugu, Tokyo 103-0023 (JP); IHARA, Sigeo, Tokyo 113-8654 (JP); WADA, Youichiro, Tokyo 113-8654 (JP)
(74) Representative: Maiwald Patentanwalts GmbH
(86) International application number: PCT/JP2016/061219
(87) International publication number: WO 2016/178351

(57) **Abstract**

A sample treatment system includes a robot that includes a main body with a plurality of arms and a plurality of hand tools to be detachably attached to the plurality of arms, and a treatment instrument for treating a sample is disposed within the reach of the hand tools attached to the plurality of arms. The robot selects and puts on suitable hand tools according to a treatment to be performed on a sample to treat the sample.

## Description

### TECHNICAL FIELD

The present invention is directed to a sample treatment system for treating a sample. In more detail, the present invention relates to a sample treatment system for automating a treatment that is conventionally performed by a worker.

### BACKGROUND ART

In the field of life science such as life science study and new drug development, most of the processes in cell engineering treatments and molecular biological techniques rely on manual labor of workers. While a lot of time and labor of workers are spent, there is still a problem with the reproducibility of data such as variation related to human factors.

Some samples to be handled contain dangerous materials to a living body, for example, hazardous materials, such as toxic bacteria and powerful drugs, and highly radioactive isotopes. The automation of a work handling such samples can contribute to the safety of workers. Further, automation using general labwares enables accurately treating a number of samples for a long time. Therefore, there is a need for automating such works also in terms of achieving more efficient deployment of workers.

Patent Document 1 to Patent Document 3 disclose sample treatment systems that automate a sample treatment by means of a robot that grips a labware or the like with two gripping members.

### CITATION LIST

### Patent Documents

Patent Document 1: JP 5305174B
Patent Document 2: JP 5305175B
Patent Document 3: JP 5305176B

### SUMMARY OF INVENTION

### Technical Problem

For labwares that cannot be gripped with the two gripping members, the systems of Patent Document 1 to Patent Document 3 provide holders that correspond to such labwares.

However, the holders are operated only based on a movement of changing the distance between the two gripping members, the operable movements of the holders are limited. Therefore, even with such holders, possible operations or works are limited. As a result, it has been difficult to apply a fine work that mimics techniques and tips of a skilled worker to an experiment, and it has sometimes been impossible to perform a desired treatment.

The present invention has been made in view of such problems with the prior art, and an object thereof is to provide a sample treatment system for an automated sample treatment that can perform a fine work that mimics techniques and tips of a skilled worker and that can prevent the variation between samples to be prepared.

### Solution to Problem

As a result of a keen study for achieving the above-described object, the present inventors have found that the limitations on the capability of operations and works are greatly reduced by selecting a hand tool suitable for the treatment to be performed from among a plurality of hand tools, attaching it to an arm, and treating the sample by using the hand tool, and that the above object can thereby be achieved.
The present invention was thus completed.

That is, the sample treatment system of the present invention, which includes a plurality of arms each including a plurality of joints, and a plurality of hand tools attachable to the arms, is configured to select and put hand tools suitable for the treatment to be performed so as to treat a sample on an end of each of the plurality of arms.

### Advantageous Effects of Invention

According to the present invention, hand tools that are suitable for the treatment to be performed on a sample are attached to the plurality of arms that have the plurality of joints and are capable of moving freely. Therefore, it is possible to provide the sample treatment system that can perform fine works that mimic techniques and tips of a skilled worker in an automated sample treatment and that can also prevent the variation between samples to be prepared.

### BRIEF DESCRIPTION OF DRAWINGS

FIG. 1 illustrates an example of the main body of a robot of a sample treatment system according to the present invention.
FIG. 2 illustrates an example of the joining portion between an arm and a hand tool of a robot.
FIG. 3 illustrates an example of the arrangement of work benches of a sample treatment system according to the present invention.
FIG. 4 illustrates an example of a hand tool for gripping a treatment instrument.
FIG. 5 illustrates another example of the hand tool for gripping a treatment instrument.
FIG. 6 illustrates another example of the hand tool for gripping a treatment instrument.
FIG. 7 illustrates another example of the hand tool for gripping a treatment instrument.
FIG. 8 illustrates another example of the hand tool for gripping a treatment instrument.
FIG. 9 illustrates an example of a state in which a Petri dish lid is opened and closed.
FIG. 10 illustrates another example of the hand tool for gripping a treatment instrument.
FIG. 11 illustrates an example of a hand tool for operating a pipette.
FIG. 12 illustrates an example of a treatment in which the hand tool for operating a pipette and the hand tool for gripping a treatment instrument are coordinately used.

### DESCRIPTION OF EMBODIMENTS

A sample treatment system of the present invention will be described in detail.

The sample treatment system of the present invention includes a robot that includes a main body with a plurality of arms and a plurality of hand tools to be detachably attached to the arms, and a treatment instrument for treating a sample is disposed within the reach of hand tools attached to the arms.

According to the treatment to be performed on the sample, the robot selects suitable hand tools and attaches them to the arms so as to perform the treatment.

### Main Body

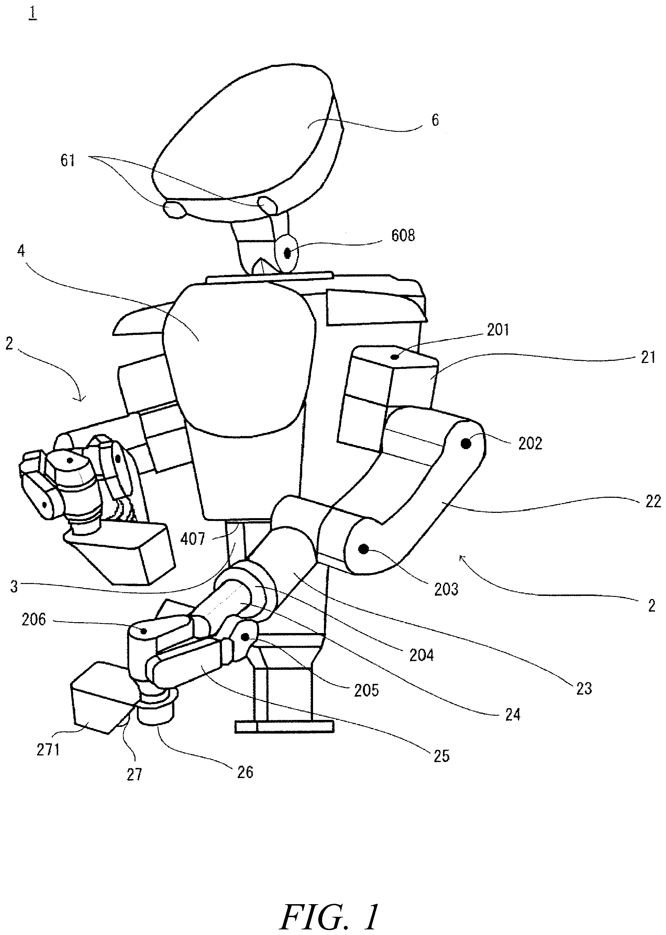

As illustrated in FIG. 1, the main body 1 of the robot includes the plurality of arms 2. The robot is connected to a controller including a processor for controlling the sample treatment operation, a memory, an input-output device and the like so that interactive communication is possible.

The arms 2 function as manipulators. It is preferred that two arms are provided respectively on the right and left sides of a body 4 that is pivotably disposed on a base 3 via a seventh joint 407.

A larger number of arms enable performing more complex operations and works by coordination of the plurality of arms. In contrast, in the present invention, the hand tools are switched according to the treatment, which enables performing a much wider range of capable operations and works. Therefore, with the right and left two arms, it is possible to treat a sample in a fine way that simulates techniques and tips of a skilled worker. Furthermore, it is also possible to save space.

The right and left arms 2 (R, L) include shoulders 21 (R, L), upper arms 22 (R, L), first forearms 23 (R, L), second forearms 24 (R, L) and wrists 25 (R, L), which are coupled to each other in the written order from the body portion 4 via joints. Each of the joints incorporates an actuator including a servo motor for rotating the joints and a force sensor.

The shoulders 21 are rotatably coupled to the body portion 4 by first joints 201 (R, L) having rotational axes approximately parallel to the longitudinal direction of the robot. The first joints 201 allow a twist movement of the arms 2.

The upper arms 22 are rotatably coupled to the shoulders 21 by second joints 202 (R, L) having rotational axes approximately perpendicular to the rotational axes of the first joints 201. The rotation around the second joints 202 causes an up and down movement of the forearms 22 and the distal arms.

The first forearms 23 are rotatably coupled to the upper arms 22 by third joints 203(R, L) having rotational axes approximately parallel to the rotational axes of the second joints 202. Similar to the second joints 202, the first forearms 23 cause an up and down movement of the distal arms. Further, coordinated rotation of the second joints 202 and the third joints 203 allow a back and forth movement of the attached hand tool.

The second forearms 24 include fourth joints 204 (R, L) that have rotational axes approximately perpendicular to the rotational axes of the third joints 203 and rotate in a twisting direction. The fourth joints 204 (R, L) allow a movement to incline or flip a treatment instrument.

The wrists 25 are rotatably coupled to the second forearms 24 by fifth joints 205 (R, L) having rotational axes approximately perpendicular to the rotational axes of the fourth joints 204.

At the distal ends, the wrists 25 include sixth joints 206 (R, L) having rotational axes approximately perpendicular to the rotational axes of the fifth joints 205. The wrists 25 also include attaching portions 26 to which hand tools are attached, which freely rotates along with the rotation of the sixth joints 206. The hand tools that are attached to the attaching portions 26 rotate along with the rotation of the sixth joints 206.

Coordinated rotation of the above-described joints enables performing a work while avoiding interference with treatment instruments disposed around the robot. The joints of the arms are not limited to the above described six joints, and it is only required that three or more joints with different rotational axes are provided.

Each of the actuators of the joints is constituted by a servo motor with a reducer and the like. The rotational position of each actuator is input to the controller as a signal from an encoder of the actuator.

Similarly, the signal from each of the force sensors of the joints is input to the controller, which is fed back as the rotational movement of the joints by the actuators.

In FIG. 1, the two arms disposed on the body portion have bilaterally symmetrical configuration, and the same reference signs are denoted thereto to omit the description.

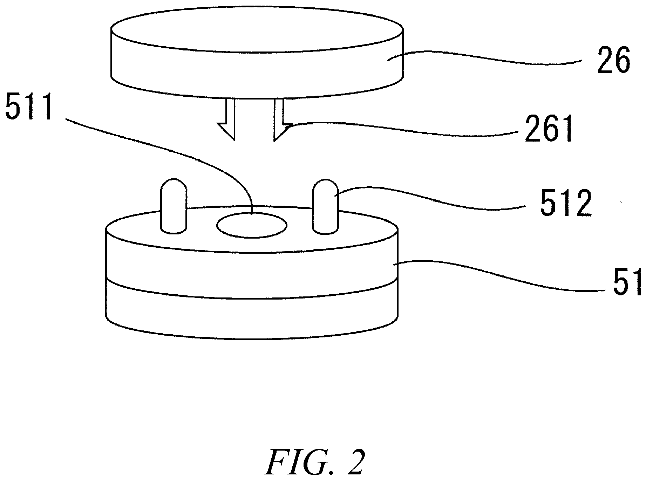

The attaching portions between the wrists and the hand tools will be described. FIG. 2 illustrates a joining portion between the attaching portion of a wrist to which a hand tool is attached, and the wrist of the hand tool.

A joining portion 51 of the hand tool has an engaging hole 511 while the attaching portion 26, which is provided at the distal end of the wrist to attach the hand tool, includes a hook 261 that is configured to engage with the engaging hole 511. The hand tool is attached or detached by means of a pneumatic chuck. Specifically, the hand tool is attached to the wrist 25 by moving the hook 261 of the attaching portion 26 of the wrist by air to hook it in the engaging hole 511 of the joining portion of the hand tool.

The attaching portion and the joining portion include connectors 512 which supply electric power, an electric signal and air pressure for driving gripper members or the like of the hand tool from the main body and transmit an electric signal from the hand tool to the main body.

It is preferred that the wrists 25 incorporate hand cameras 27. With binarization of an image captured by the cameras disposed at the distal ends of the wrists, it is possible to reliably recognize the position and the condition of a sample to be treated that is placed in a treatment instrument gripped by the hand tool, e.g. where the sample to be treated is present in an inclined Petri dish. This enables performing sophisticated operations or works such as directly adding drug solution to a sample to be treated in a Petri dish, gently adding drug solution from the edge of a Petri dish, checking whether residual solution is left in a Petri dish after drainage of the solution, and the like.

It is preferred that the hand cameras 27 include protection covers 271 in terms of preventing fouling.

It is preferred that a stereo camera 61 is further provided in addition to hand cameras 27. With the stereo camera 61, it is possible to recognize the position, the size and the distance of a treatment instrument such as a labware, empty space on a work bench and the like, and thus to treat a sample even when the arrangement of a labware and the like is changed. It is preferred that markers are provided on a labware and the corners of a work bench and the like. With the markers, it is possible to recognize the size and the like of a treatment instrument more reliably.

Specifically, the outer edge of the work bench or the like is recognized by means of the markers provided at the corners of the work bench or the like, and the presence or absence, the size and the shape of the labware is recognized by capturing the area on the work bench, i.e. the recognition area, to obtain an image and binarizing it. Then, the correct location of the labware is recognized by using the information from a fiber sensor provided in the hand tool and the information from the hand camera and the stereo camera.

It is preferred that the stereo camera 61 is disposed above the main body. It is also preferred that a head 6 with the stereo camera is provided on the body 4. It is preferred that the head 6 is coupled to the body 4 by an eighth joint 608 and a ninth joint (not shown) having mutually approximately perpendicular rotational axes. The eighth joint 608 and the ninth joint allow a vertical and lateral movement of the head 6, which enables capturing an image of a wide range without pivoting the body 4.

The main body may be disposed on a sliding rail 7. The workable area expands as the main body moves along the sliding rail 7. By disposing necessary treatment instruments around the robot, this enables treating a sample in a complex way that requires many tools or treating a sample in plural ways that require different tools.

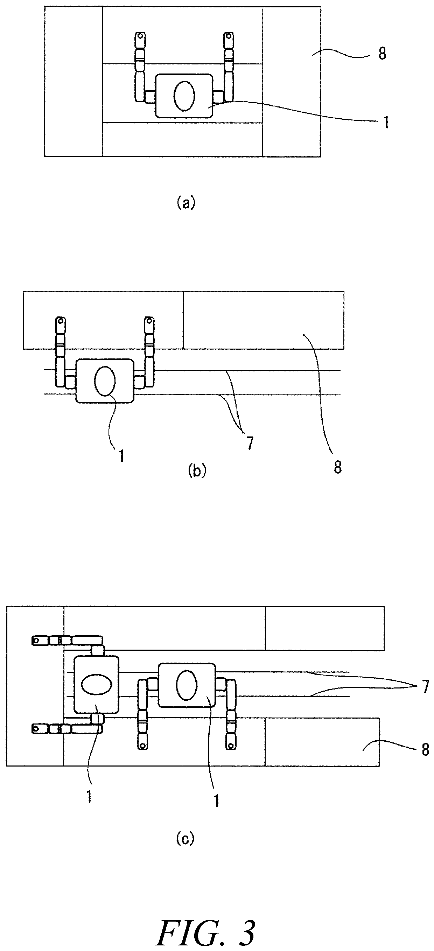

FIG. 3 illustrates an example of the layout of work benches 8 on which treatment instruments are disposed. Since the robot of the sample treatment system of the present invention includes the seventh joint 407 that allows pivoting the body, treatment instruments can be disposed on the right, left and rear sides of the robot in addition to the front side as illustrated in FIG. 3 (a). Further, the provision of the sliding rail greatly expand the reachable range of the hand tools attached to the arms as illustrated in FIG. 3 (b), which increases the degree of freedom of the arrangement of the treatment instruments.

As illustrated in FIG. 3 (c), a plurality of robots may be disposed on the sliding rail, and the plurality of robots may be coordinated to treat a sample.

While FIG. 3 illustrates the straight sliding rail 7, the sliding rail may have a curved portion or may be formed in a circular or oval shape.

### Hand Tool

The sample treatment system of the present invention, which includes a plurality of hand tools that are detachably attached to the arms, is configured to select hand tools according to the treatment to be performed and to attach them to the arms 2 and then to treat a sample.

Such hand tools include gripper hands for gripping a tool such as a test tube, a beaker, a Petri dish, a scraper, a brush or a glass rod, pipetting hands for operating a pipette and the like.

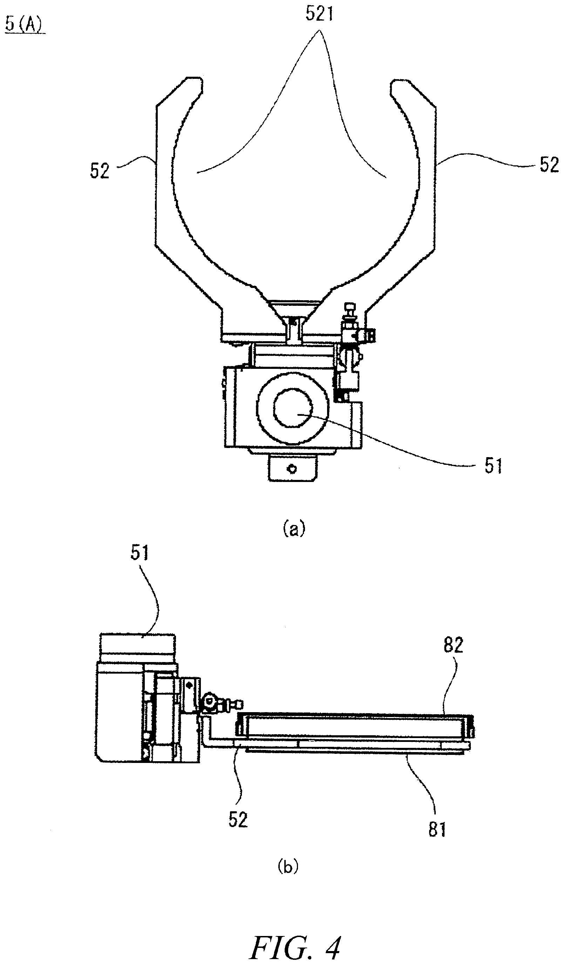

FIG. 4 (a) is a plan view of an example of a gripper hand 5A, and FIG. 4 (b) is a side view illustrating a state in which a Petri dish 81 is held. The gripper hand 5A includes a joining portion 51 to be joined to the attaching portion 26, a gripper member pair composed of two gripper members 52 protruding sideward from the joining portion 51 and a fiber sensor (not shown) for detecting the presence or absence of a gripped object such as a Petri dish.

The two gripper members 52 have approximately arcuate recesses 521 on the mutually opposing sides. The two gripper members 52 moves in the direction of getting close to or away from each other so as to grip a treatment instrument. It is only required that the arcuate recesses 521 can increase the contact area between a Petri dish 81 or a test tube 83 and the gripping members, and they need not have the same shape as the outer shape of the Petri dish 81 or the test tube 83.

With the gripper hand 5A as illustrated in FIG. 4, it is possible to grip a Petri dish or the like not only by descending the gripper hand 5A toward the Petri dish or the like from above but also by approaching the gripper members 52 of the gripper hand 5A sideways to the Petri dish or the like.

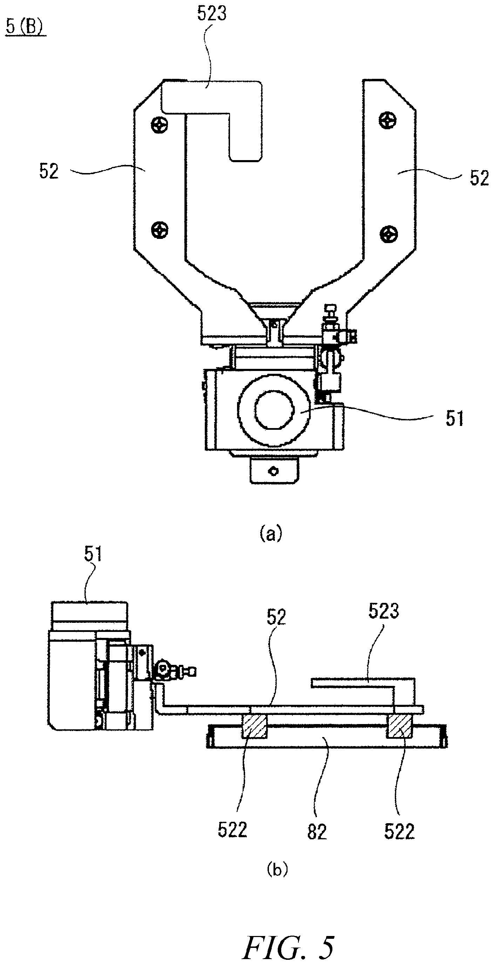

FIG. 5 (a) is a plan view of an example of another gripper hand 5B, and FIG. 5 (b) is a side view illustrating a state in which a lid 82 of the Petri dish 81 is gripped. The gripper hand 5B as illustrated in FIG. 5 includes a joining portion 51 to be joined to the attaching portion 26 and a gripper member pair composed of two gripper members 52 protruding sideward from the joining portion 51. Each of the two gripper members includes two gripping protrusions 522 with non-slip members of rubber or the like on the underside. Further, a hook 523 is provided on the upper side of one of the gripper members 52, i.e. on the opposite side from the gripping protrusions 522.

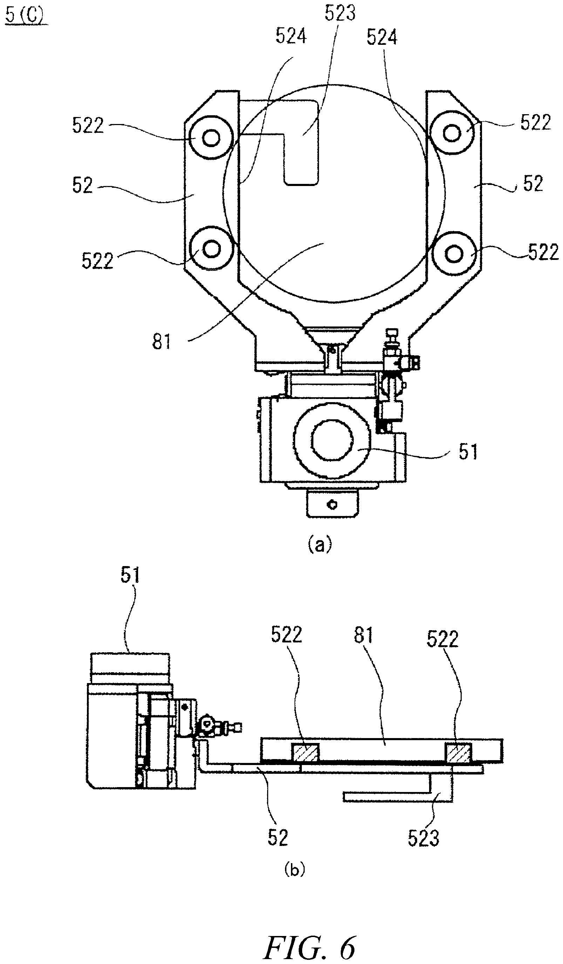

With the gripper hand 5B of FIG. 5, it is possible to grip the upper end of a Petri dish or the like, which enables avoiding obstacles for placing the Petri dish or the like. Specifically, it is possible to exchange the Petri dish 81 without interference with the gripping protrusions 522 and the like of a gripper hand 5C of FIG. 6, which is described below.

By hooking the hook 523 on a protrusion (not shown) provided on the lower part of a door of a thermostatic chamber or the like, it is also possible to open the door while keeping a Petri dish or the like gripped.

FIG. 6 (a) is a plan view illustrating a state in which the Petri dish 81 is gripped by yet another gripper hand 5C, and FIG. 6 (b) is a side view thereof. The gripper hand 5C as illustrated in FIG. 6 is configured such that each of two gripper members 52 includes two gripping protrusions 522 with non-slip members of rubber or the like on the upper side. Further, a hook 523 is provided on the underside of one of the gripper members.

Unlike the gripper members 52 of the gripper hand of FIG. 4, the gripper members of the gripper hand 5C of FIG. 6 do not have arcuate recesses 521 but have linear portions 524 on the mutually opposing sides of the two gripper members. With the linear mutually opposing sides, the gripper members 52 can tightly grip the Petri dish 81 or the like in a position in which the peripheral part of the Petri dish or the like is mounted thereon. Therefore, it is possible to swing the Petri dish or the like to stir the sample.

By hooking the hook 523 on a protrusion provided in the upper part of the door of a thermostatic chamber or the like, it is also possible to open the door while keeping a Petri dish or the like gripped.

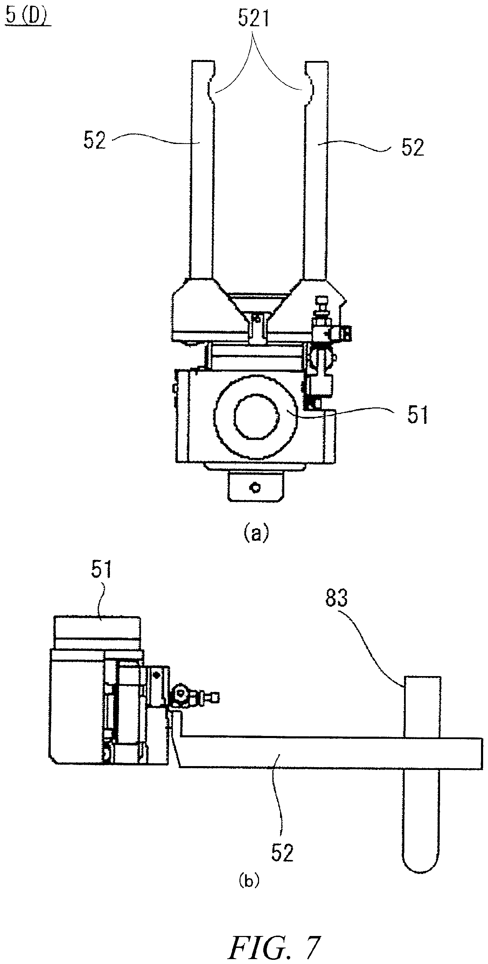

FIG. 7 (a) is a plan view of an example of yet another gripper hand 5D, and FIG. 7 (b) is a side view illustrating a state in which a test tube 83 is gripped. The gripper hand 5D is the same as the above-described gripper hand 5A as illustrated in FIG. 4 except that the approximately arcuate recesses 521 on the mutually opposing sides of two gripper members 52 have a shape suitable for gripping the test tube 83.

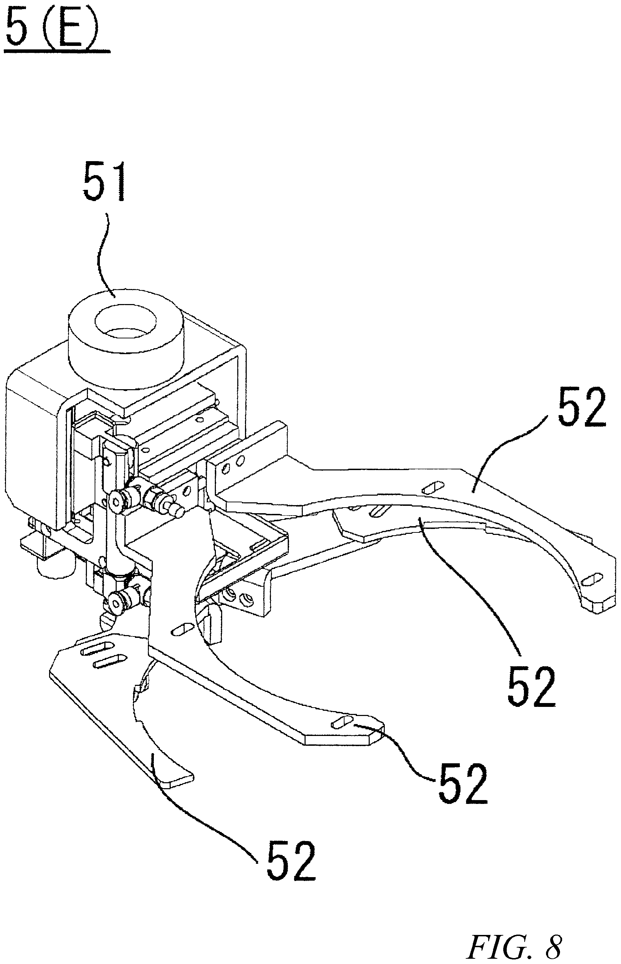

A gripper hand 5E as illustrated in FIG. 8 includes a plurality of the same gripping member pairs as that of the gripper hand 5A of FIG. 4, which are aligned in the direction perpendicular to the direction of the two gripping members 52 of the gripping member pairs getting close to or away from each other, i.e. aligned in the vertical direction. Further, one or both of the gripper member pairs move in the direction (vertical direction) approximately perpendicular to the direction of the two gripper members 52 getting close to or away from each other, so that the two gripper member pairs gets close to or away from each other.

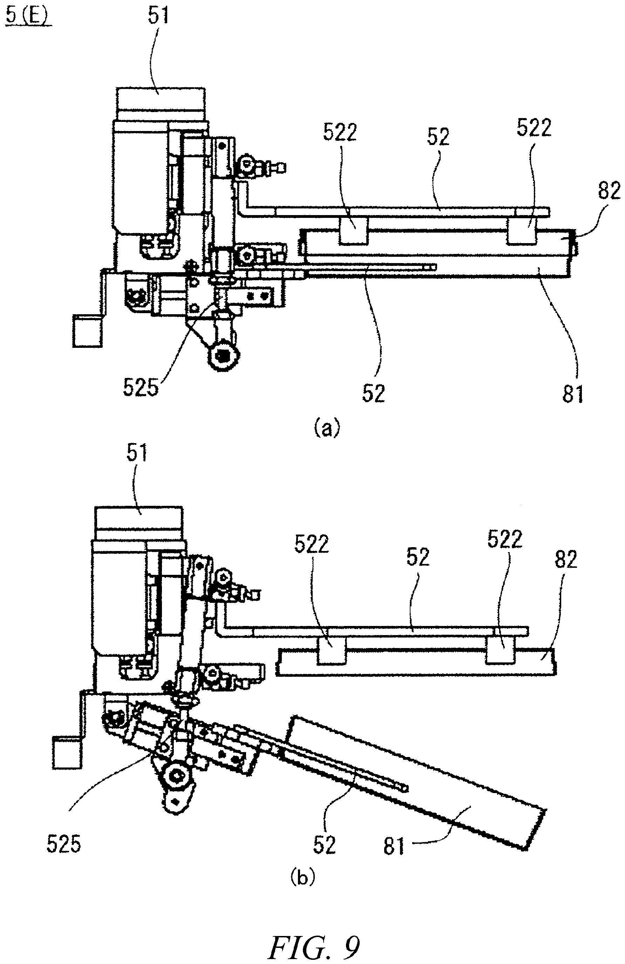

With the gripper member pairs that get close to or away from each other, it is possible to grip the Petri dish lid 82 with the upper gripper member pair while gripping the Petri dish 81 with the lower gripper member pair as illustrated in FIG. 9. For example, by extending a rod 525 supporting the lower gripper pair to expand the space between the two gripper member pairs, it is possible to open or close the lid of a Petri dish or the like by one-hand operation.

The gripper member pairs of the above-described gripper hands 5A to 5E may be configured such that the gripper members 52 rotate in mutually opposite directions about the respective proximal ends so that the respective distal ends moves the most. However, it is preferred that the two gripper members slide in parallel toward or away from each other. With the parallel movement, it is possible to grip a variety of treatment instruments with different sizes.

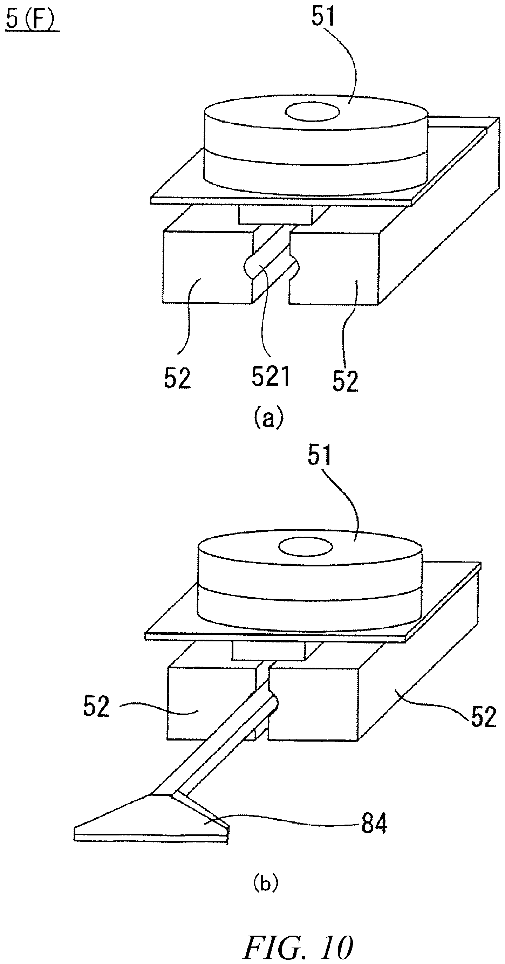

FIG. 10 (a) is a perspective view of an example of yet another gripper hand 5F, and FIG. 10 (b) is a perspective view illustrating a state in which a scraper 84 is gripped by the gripper hand 5F.

The gripper hand 5F of FIG. 10 is configured such that the gripper members 52 are disposed at a position different from those of the gripper hands 5A to 5E. The mating faces of the two gripper members 52 are located approximately on an extension of the rotational axis of the sixth joint 206 for rotating the hand tool. With the gripper hand 5F, for example, it is possible to change the direction of the scraper 84 gripped by the gripper hand 5F by rotating the sixth joint 206. By coordinating the rotation of the sixth joint 206 with the back and forth movement of the arm 2, it is possible to move the scraper 84 along the edge of the Petri dish 81 so as to completely scrape the sample or the like.

It is preferred that the two gripper members 52 have recesses 521 that fit the stem of the scraper.

Each of the gripper member pairs of the above-described gripper hands 5A to 5F incorporates an actuator and a force sensor. The distance between the two gripper members 52 and a signal of the force sensor are input to the controller and are fed back as the movement of the gripper members 52 by means of the actuator.

It is preferred that the gripper hands 5A to 5F are placed in a yard (not shown) of the base 3. When the gripper hands are placed in the yard of the base 3, they are always within the movable range of the arms 2 even when the main body 1 moves along the sliding rail 7. Accordingly, it is not necessary to move the main body 1 to fetch a hand tool when switching the hand tool, which improves the work efficiency.

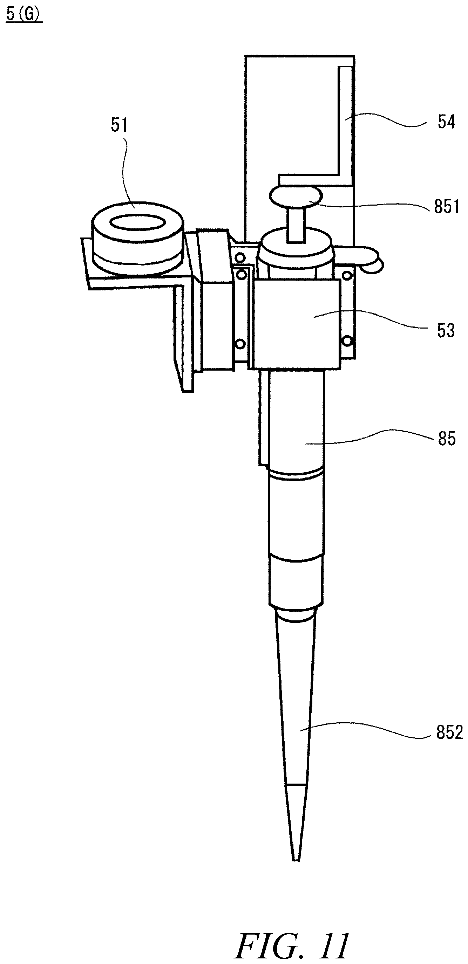

A pipetting hand 5G as illustrated in FIG. 11 includes a joining portion 51 to be joined to the attaching portion 26, a holder 53 for fixing a pipette, a pressing member 54 for pressing a push button 851 of the pipette 85. The pressing member 54 is driven by an actuator that includes a servo motor or the like. The pressing force of the pressing member 54 is detected by means of a force sensor, and a signal of the force sensor is transmitted to the controller and is fed back to drive the actuator, so that suction and discharge of drug solution and disposal of a disposable tip 852 are performed by one-hand operation.

Since the pipetting hand 5G can operate a pipette by one-hand operation, it can add solution and the like while keeping the pipette 85 tilted. Accordingly, it is possible to mimic fine works of a skilled worker such as adding solution via the inner wall of the test tube 83.

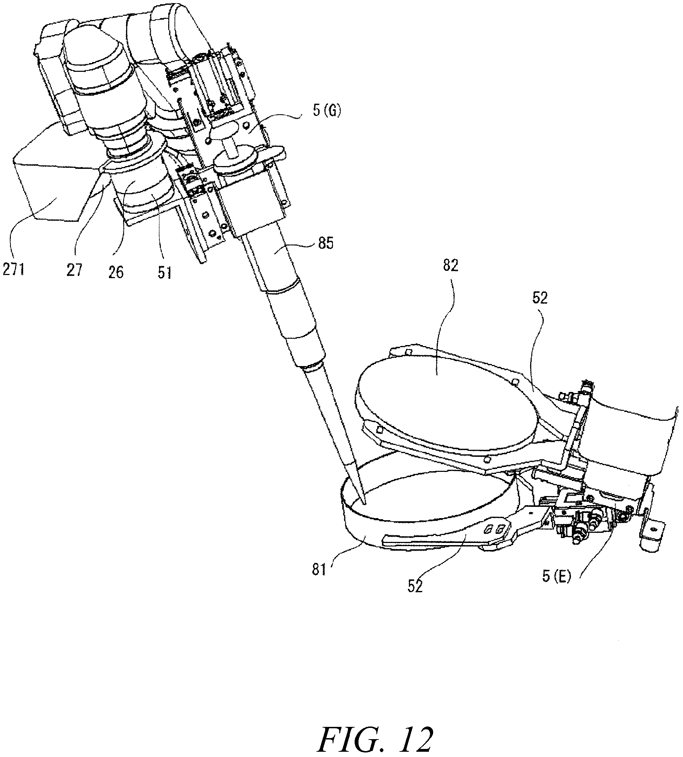

By coordinating the gripper hand 5E of FIG. 8 and FIG. 9 with the pipetting hand 5G of FIG. 11, for example, it is possible to slightly open the lid 82 of the Petri dish 81 to perform a treatment as illustrated in FIG. 12. Accordingly, it is possible to mimic techniques of a skilled worker such as minimizing exposure of a sample in a Petri dish to the outside. Furthermore, it is also possible to omit a movement of removing and placing the lid 82, which greatly improves the work efficiency.

The pipetting hand 5G is often used along with specific drug solution and a specific treatment instrument and may therefore be placed near the drug solution or the treatment instrument as well as in the yard of the base 3.

### Sample Treatment System

The sample treatment system of the present invention is to perform treatments such as adding drug solution, stirring, separation, suctioning supernatant, heating, cooling and the like on a sample (cell, blood, tissue, urine or the like), and treatment instruments are placed within the reach of the hand tools attached to the distal end of the arms 2 of the robot that moves along the sliding rail 7.

Such treatment instruments include tools that are used for sample treatment such as Petri dishes, Petri dish stands, scrapers, scraper stands, test tubes, test tube stands, pipettes, pipette stands, disposable tips, disposable tip stands, thermostatic chambers, centrifuges, stirrers, heaters/coolers, work benches on which these treatment instruments are placed, waste tanks and waste boxes.

Petri dishes, which are flat dishes with lids for storing samples, are placed in a Petri dish stand placed within the reach of the hand tools. For the Petri dishes, for example, the gripper hands 5A to 5C and 5E of FIG. 4 to FIG. 6 and FIG. 8 are used.

Scrapers, which are a tool for mixing or scraping a sample, are arranged in a scraper stand. For the scrapers, for example, the gripper hand 5F of FIG. 10 is used.

Test tubes, which are a tool for treating a sample in various ways, are arranged in a test tube stand. A test tube stand is also disposed in a thermostatic chamber and the like as well as on the work bench. Such test tubes include micro tubes that can be used for centrifuge as well as normal test tubes.

For the test tubes, for example, the gripper hand 5D of FIG. 7 is used.

Pipettes are a device for suctioning or adding a regent or supernatant. In the present invention, a plurality of different fixed volume pipettes is provided.

The pipettes are respectively fixed to the pipetting hands 5G of FIG. 7, and the pipetting hands 5G are placed in a pipette stand. Near the pipette stand, disposable tips arranged in a disposable tip stand are provided.

Thermostatic chambers are, for example, a device for culturing samples such as a CO₂ incubator, and heater/coolers are a device for heating/cooling samples. Petri dishes and test tubes with samples therein are stored in these devices.

Centrifuges are a device for separating or fractionating components of a sample in a test tube by means of centrifugal force, and stirrers are a device for stirring a sample in a test tube.

Waste tanks are a container for disposing of used drug solution and the like, and waste boxes are a container for disposing of expendable items such as used scrapers, disposable tips and the like.

The treatment instruments are not limited to the above-described instruments but may include other instruments. Further, one or more of the above-described instruments are omissible.

Next, an operation of the sample treatment system will be described.

The operation of the robot is controlled by the controller, and the robot starts the operation in response to an input of an operational command from the controller. The robot treats a sample by coordinately moving both arms, but some processes may be performed only with one of the arms.

In response to a command from the controller, the robot moves one arm 2 (R) to bring the attaching portion 26 of the arm 2 (R) to the joining portion 51 of the gripper hand 5B of FIG. 5 placed in the yard of the base 3, so as to attach the gripper hand 5B to the arm 2 (R). Further, the robot moves the other arm 2 (L) to bring the attaching portion 26 of the arm 2 (L) to the joining portion 51 of the gripper hand 5C of FIG. 6 placed in the yard of the base 3, so as to attach the gripper hand 5C to the arm 2 (L).

By moving the arm 2 (R) and using the gripper hand 5B of FIG. 5, the robot grips the lid 82 of the Petri dish 81 with a sample (e.g. cells) therein placed on the work bench 8 from above, lifts and opens the lid 82, and places the lid 82 by the side of the Petri dish 81. Then, by moving the same arm 2 (R), the robot grips the Petri dish 81 with the sample therein placed on the work bench 8 with the gripper hand 5B and places the Petri dish 81 with the sample therein on the gripper hand 5C of FIG. 6 of the other arm 2 (L). The robot grips the Petri dish with the gripper hand 5C of FIG. 6. The Petri dish is thus switched from the gripper hand 5B of FIG. 5 to the gripper hand 5C of FIG. 6.

The robot detaches the gripper hand 5B of FIG. 5 from one arm 2 (R) and places it in a predetermined yard, and then moves the arm 2 (R) to attach the pipetting hand 5G of FIG. 11 thereto. Then, the robot moves the arm 2 (R) to the disposable tip stand, recognizes the presence or absence (and location) of the disposable tips 852 by means of the hand camera 27, and presses the pipette 85 against a disposable tip 852 to fit it on.

Thereafter, the robot dips the tip of the pipette into drug solution while pressing the push button 851 of the pipette 85 with the pressing member 54 of the pipetting hand 5G of one arm 2 (R), and releases the push button 851 to suction a certain amount of drug solution into the pipette.

Then, the robot moves the tip of the pipette 85 to the above of the Petri dish 81 with the sample therein gripped by the gripper hand 5C of the other arm 2 (L), recognizes the location of the sample in the Petri dish 81 by means of the hand camera 27, and presses the push button 851 of the pipette 85 to add the drug solution dropwise to a desired location.

Thereafter, the robot moves the other arm 2 (L) to swing the Petri dish 81 like a precession movement so as to spread the drug solution all over the sample. As described above, with the gripper hand 5C of FIG. 6, it is possible to grip the Petri dish 81 in a position in which the periphery of the bottom thereof is mounted on the gripper members 52, and the side wall of the Petri dish is held by the gripping protrusions 522. Accordingly, the Petri dish 81 does not move off the right position even when it is swung.

In this step, the robot fully presses the push button 851 of the pipette 85 by means of the pressing member 54 of the pipetting hand 5G of one arm 2 (R) above the waste box so as to drop the disposable tip 852 into the waste box. Then, the robot places the pipetting hand 5G in the yard and puts on the gripper hand 5B of FIG. 5 again.

After spreading the drug solution all over the sample, the robot switches the Petri dish 81 with the sample therein from the other arm 2 (L) to the gripper hand 5B of one arm 2 (R).

Thereafter, the robot hooks the hook 523 of the gripper hand 5C of FIG. 6 of the other arm 2 (L) on a protrusion of a door of the thermostatic chamber and opens the door. Then, the robot hooks the hook 523 on a protrusion of a sliding shelf in the thermostatic chamber and pulls out the sliding shelf.

The robot may open the door of the thermostatic chamber or pull out the sliding shelf by using the gripper hand 5D of FIG. 7 or the gripper hand 5F of FIG. 10, and it is not always necessary to provide a protrusion for hooking the hook to the door and the shelf.

Then, after placing the Petri dish 81 on the sliding shelf from the gripper hand 5B of the one arm 2 (R), the robot moves the arm 2 (R) to grip the Petri dish lid 82 with the gripper hand 5B and covers the Petri dish 81 placed on the sliding shelf with the lid. Thereafter, the robot pushes the sliding shelf to bring it back into the thermostat chamber and pushes the door of the thermostatic chamber to close it.

After the elapse of a predetermined period of time, the robot places the gripper hand 5B of FIG. 5 of one arm 2 (R) in the yard and attaches the gripper hand 5E of FIG. 8. The robot hooks the hook 523 of the gripper hand 5C of FIG. 6 of the other arm 2 (L) on the door of the thermostatic chamber and opens the door. Then, the robot hooks the hook 523 on the sliding shelf in the thermostatic chamber and pulls out the sliding shelf.

Then, the robot grips the lid of the Petri dish lid 82 with the upper gripper member pair of the gripper hand 5E of FIG. 8 and the Petri dish 81 with the lower gripper member pair, and takes out the Petri dish from the thermostatic chamber.

Thereafter, the robot brings back the sliding shelf with the hook 523 of the gripper hand 5C of the other arm 2 (L) and closes the door of the thermostatic chamber. Then, the robot places the gripper hand 5C of FIG. 6 in the predetermined yard and attaches the pipetting hand 5G of FIG. 11 to the other arm 2 (L). Then, the robot fits a disposable tip 852 on the pipette 85, dips the tip of the pipette 85 into drug solution while pressing the push button 851 of the pipette 85 by means of the pressing member 54, and releases the push button 851 to take a certain amount of the drug solution into the pipette.

Thereafter, the robot moves the rod 525 of the gripper hand 5E of FIG. 8 to slightly open the lid 82 of the Petri dish 81 as illustrated in FIG. 12, recognizes the position of the tip of the pipette 85 and the Petri dish 81 by means of the hand camera 27, and adds the drug solution dropwise into the Petri dish. After the addition of the drug solution, the robot immediately moves the rod 525 of the gripper hand to close the lid. Then, the robot places the covered Petri dish 81 on the sliding shelf, pushes the sliding shelf to bring it back, and closes the door of the thermostatic chamber.

Then, the robot fully presses the push button 851 of the pipette 85 above the waste box by means of the pressing member 54 of the pipetting hand 5G of the other arm 2 (L) so as to drop the disposable tip 852 into the waste box. Thereafter, the robot places the pipetting hand 5G and the gripper hand 5E of FIG. 8 in the predetermined yard.

After the elapse of a predetermined period of time, the robot moves one arm 2 (R) to bring the attaching portion 26 of the arm 2 (R) to the joining portion 51 of the gripper hand 5B of FIG. 5 placed in the yard of the base 3, so as to attach the gripper hand 5B to the arm 2 (R). Further, the robot moves the other arm 2 (L) to bring the attaching portion 26 of the arm 2 (L) to the joining portion 51 of the gripper hand 5C of FIG. 6 placed in the yard of the base 3, so as to attach the gripper hand C to the arm 2 (L).

Then, the robot hooks the hook 523 of the gripper hand 5C of FIG. 6 of the other arm 2 (L) on the protrusion of the door of the thermostatic chamber and opens the door. Then, the robot hooks the hook 523 on the sliding shelf in the thermostatic chamber and pulls out the sliding shelf.

By moving the arm 2 (R) and using the gripper hand 5B of FIG. 5, the robot grips the lid 82 of the Petri dish 81 with the sample therein placed on the work bench 8 from above, and opens the lid and places it on the work bench 8.
Then, by moving the same arm 2 (R), the robot grips the Petri dish 81 with the sample therein placed on the sliding shelf with the gripper hand 5B and places the Petri dish 81 with the sample therein on the gripper hand 5C of FIG. 6 of the other arm 2 (L). The robot grips the Petri dish 81 with the gripper hand 5C of FIG. 6.

Thereafter, the robot places the gripper hand 5B of FIG. 5 in the yard and attaches the gripper hand 5F of FIG. 10 to one arm 2 (R), and grips a scraper 84 in the scraper stand as illustrated in FIG. 10 (b).

Then, the robot recognizes the position of the edge of the Petri dish 81 and the head of the scraper 84 by means of the hand camera 27, moves the head of the scraper 84 along the corner of the Petri dish to evenly scrape the entire Petri dish so as to remove all of the sample stuck on the bottom of the Petri dish.

Then, the robot confirms by means of the hand camera 27 that no sample is left, and drop the scraper 84 into the waste box.

With the gripper hand 5C of FIG. 6, the Petri dish 81 in the gripper hand 5C does not move off the right position even when it is pressed hard by the scraper 84 since the periphery of the bottom of the Petri dish 81 is placed on the gripper member 52 and the side wall of the Petri dish 81 is held by the gripping protrusions 522. Accordingly, it is possible to reliably scrape the sample.

As described above, the sample treatment system of the present invention includes the robot with the freely movable arms and the plurality of hand tools, and the plurality of treatment instruments. The plurality of treatment instruments are disposed within the reach of the hand tools attached to the robot arms. The robot selects and puts on hand tools according to the treatment to be performed on a sample and uses the treatment instruments to treat the sample. The sample treatment system of the present invention can perform not only the above-described sample treatment but also a variety of treatments by suitably combining the hand tools and treatment techniques.

Since the hand tools are selected and used according to the treatment, the sample treatment system can use any treatment instrument only by changing the hand tools, and it is not necessary to tailor the treatment instruments to the system. Therefore, it is possible to use general treatment instruments designed for manual treatments by workers without any change and therefore to automate a sample treatment at low cost.

The automation of a sample treatment by using the sample treatment system of the present invention enables eliminating the variation related to the manual works of workers, which can prevent a decrease in reproducibility caused by difference between workers and the like and which can also enables performing works that mimic techniques and tips of a skilled worker. Therefore, it is possible to obtain expected treatment results.

With sample treatment system of the present invention, it is possible to strictly regulate the addition time of drug solution and the like, and it is therefore possible to prepare a plurality of samples with different addition intervals of a plurality of drug solutions (e.g. an inflammation mediator, a cross linker, formalin, glycine and phosphate buffer saline) in order to observe the influence of the difference in addition interval of the drug solutions.

### REFERENCE SIGNS LIST

- 1: Robot main body
- 2: Arm
- 21: Shoulder
- 22: Upper arm
- 23: First forearm
- 24: Second forearm
- 25: Wrist
- 26: Attaching portion
- 261: Hook
- 27: Hand camera
- 271: Protection cover
- 201: First joint
- 202: Second joint
- 203: Third joint
- 204: Fourth joint
- 205: Fifth joint
- 206: Sixth joint
- 3: Base
- 4: Body
- 407: Seventh joint
- 5A: Gripper hand
- 5B: Gripper hand
- 5C: Gripper hand
- 5D: Gripper hand
- 5E: Gripper hand
- 5F: Gripper hand
- 5G: Pipetting hand
- 51: Joining portion
- 511: Engaging hole
- 512: Connector
- 52: Gripper member
- 521: Recess
- 522: Gripping protrusion
- 523: Hook
- 524: Linear portion
- 525: Rod
- 53: Holder
- 54: Pressing member
- 6: Head
- 61: Stereo camera
- 608: Eighth joint
- 609: Ninth joint
- 7: Sliding rail
- 8: Work bench
- 81: Petri dish
- 82: Lid
- 83: Test tube
- 84: Scraper
- 85: Pipette
- 851: Push button
- 852: Disposable tip

## Claims

1. A sample treatment system, comprising:
a main body with a plurality of arms; and
a plurality of hand tools configured to be detachably attached to the plurality of arms,
wherein the plurality of arms comprises respective attaching portions at distal ends of the plurality of arms to which the plurality of hand tools is attached, and respective pluralities of joints,
the sample treatment system is configured to dispose a treatment instrument for treating a sample, within a reach of the plurality of hand tools attached to the plurality of arms, and
the sample treatment system is configured to select and attach the plurality of hand tools to the plurality of arms according to a treatment to treat the sample.

2. The sample treatment system according to claim 1, wherein the plurality of hand tools comprises a hand tool selected from the group consisting of a gripper hand, and a pipetting hand.

3. The sample treatment system according to claim 2, which comprises the gripper hand including a gripper member pair with two gripper members that move in a direction that the two gripper members get close to or away from each other, in which the two gripper members include a plurality of gripping protrusions on respective upper sides.

4. The sample treatment system according to claim 2 or 3, which comprises the gripper hand including a gripper member pair with two gripper members that move in a direction that the two gripper members get close to or away from each other, in which the two gripper members include a plurality of gripping protrusions on respective under sides.

5. The sample treatment system to any one of claims 2 to 4,
which comprises the gripper hand including a plurality of gripper member pairs each including two gripper members that move in a direction that the two gripper members get close to or away from each other, in which the plurality of gripper member pairs is aligned in a direction approximately perpendicular to a direction that the two gripper members get close to or away from each other, and
the plurality of gripper member pairs moves in a direction approximately perpendicular to a direction that the two gripper members get close to or away from each other so as to get close to or away from each other.

6. The sample treatment system according to any one of claims 2 to 5,
wherein the pipetting hand comprises a holder for fixing a pipette, and a pressing member, and
the pipetting hand is configured such that the pipette is operable only with the pipetting hand.

7. The sample treatment system according to claim 6, wherein the sample treatment system is configured to recognize presence or absence of a disposable tip in a disposable tip stand.

8. The sample treatment system according to any one of claims 1 to 6, wherein the main body is configured to move along a sliding rail.
